Europäisches Patentamt

European Patent Office

Office européen des brevets

(11) Publication number: **0 392 958**
**A1**

## EUROPEAN PATENT APPLICATION

(21) Application number: **90610018.5**

(22) Date of filing: **09.03.90**

(51) Int. Cl.5: **H04L 12/28, //H02B1/34, H04Q1/06, H05K7/00**

(30) Priority: **13.03.89 DK 1201/89**

(43) Date of publication of application:
**17.10.90 Bulletin 90/42**

(84) Designated Contracting States:
**AT BE CH DE ES FR GB GR IT LI LU NL SE**

(71) Applicant: **Aktieselskabet Laur. Knudsen Nordisk Elektricitets Selskab**
**20-32, Industriparken**
**DK-2750 Ballerup(DK)**

(72) Inventor: **Pedersen, Kurt Lindegaard**
**Hjortespringet 1**
**DK-3400 Hillerod(DK)**

(74) Representative: **Larsen, Anna (DK) et al**
**c/o Chas. Hude H.C. Andersens Boulevard 33**
**DK-1553 Copenhagen V(DK)**

(54) **A cable system including a rack.**

(57) A cable system including a rack (10) for the mounting of exchangeable units adapted to be coupled to a data cable (11) in a local area network in predetermined points of coupling, said points of coupling being located at regular intervals along the cable. The cable (11), such as an ETHERNET cable, is arranged in large circumferential loops (51-58) of such a length that the length of an integral number of loops corresponds substantially to the predetermined distance defined as the predetermined interval between two points of coupling of said local data network, typically $2\frac{1}{2}$ m, and such that the loop(s) start at one point of coupling and end at another point of coupling (41-48).

*Fig.1*

# A cable system including a rack

The invention relates to a cable system including a rack for the mounting of exchangeable units adapted to be coupled to a data cable in a local area network in predetermined points of coupling, said points of coupling being located at regular intervals along the cable.

US-PS, No. 4,764,849 discloses a coaxial data bus distribution apparatus capable of being coupled to several peripheral devices with the same electrical distance between the points of coupling. The distances referred to in this publication are, however, only of a length of about 0.5 m and 6.35 cm, i.e. small distances easy to achieve.

US-PS No. 3,336,434 discloses furthermore a way of arranging a main bus in form of flat multiple conductor cables in S-shaped loops in a cable cabinet, each of said loops being provided with plug-out-connections.

Local data networks are typically formed by coaxial cables, preferably ETHERNET cables, capable of being coupled to terminal equipment at predetermined points disposed at regular intervals along the cable. The intervals between the points of coupling of such a cable are typically of a length of $2\frac{1}{2}$ m. The cable is usually laid out in a building in such a manner that said cable is passed through a number of offices provided with workstations including data terminals, said terminals being coupled to the local network. The predetermined distance of $2\frac{1}{2}$ m corresponds in many cases to the distance between two terminals, and thus the cable comprising the predetermined points of coupling meets the requirements and the purpose aimed at.

Sometimes it is, however, necessary to install an extraordinarily high number of data terminals in a small local area, whereby a problem arises in connection with the cable comprising points of coupling at intervals of $2\frac{1}{2}$ m. The intermediary cable lengths must under no circumstances be removed nor damaged, said intermediary lengths being an absolutely necessary condition for a satifactory function of the local network. In addition, the cable must be handled rather carefully. The coaxial cables are indeed bendable, but the bendings must present a reasonably large radius of curvature, and the size of the radius of curvature depends on the type of cable in question and on the frequency it is desired to operate at. Sharp bendings, if any, or just bendings of a too small radius of curvature may cause both a discontinuity reducing the transmission coefficient, i.e. the part of the signal the cable can retransmit, and an increase of the reflection coefficient, which is undesired because the signal reflected moves in a direction opposite the intended direction. In other words the problem to be solved is the 10, 15 or perhaps 20 m of heavy coaxial cable, such as approximately 1.0-1.5 cm thick cable, which are to be stored without being subjected to bends or sharp bendings and such that the points of couplings are easily accessible.

The object of the present invention is in relation to a coaxial cable in a local network to provide a large number of easily accessible points of coupling being almost coincident compared to the position of the coupling locally in an office etc.

The cable system including a rack according to the invention is characterised in that the cable, such as an ETHERNET cable, is arranged in large circumferential loops of such a length that the length of an integral number of loops corresponds substantially to the predetermined distance defined as the predetermined interval between two points of coupling of said local data network, typically $2\frac{1}{2}$ m, and such that the loop(s) start at one coupling point and end at another coupling point.

According to a preferred embodiment the points of coupling are arranged one below the other in a vertical column. A shelf is preferably provided in front of each point of coupling, said shelf allowing mounting of a transceiver receiving and retransmitting data to and from a peripheral device connected thereto.

The points of coupling may, however, also be mutually arranged in other ways, such as on a substantially horizontal line or along a circular arc.

The cable system is preferably arranged in a cable cabinet. The cable cabinet according to the invention renders it possible to arrange a number of loops, such as for instance eight, of a length of $2\frac{1}{2}$ m, i.e. a cable of an approximate total length of 20 m, in a cabinet with the result that said cabinet can include for instance eight points of coupling for the equipment it is desired to use.

Such a cable cabinet is very advantageous because in connection with new installations it is possible to lay out the cable at a very early stage of the installation operation so as later on to finish said installation operation by mounting transceivers and feeding cables to the individual terminals. In addition, the cabinet simultaneously allows an easy access for an inspection of the individual transceivers.

The invention is described in greater details below with reference to the accompanying drawing, in which

Figure 1 is a front view of an embodiment of a cable cabinet according to the invention,

Figure 2 is a side view of the embodiment of Figure 1,

Figure 3 illustrates an embodiment of a shelf,

Figure 4 illustrates the shelf of Figure 3, said shelf being equipped with a cable and a transceiver,

Figure 5 illustrates a second embodiment of a cable system according to the invention,

Figure 6 illustrates a modification of the embodiment of Figure 1,

Figure 7 illustrates another embodiment of the shelf of Figure 3, and

Figure 8 yet another embodiment of the shelf of Figure 3.

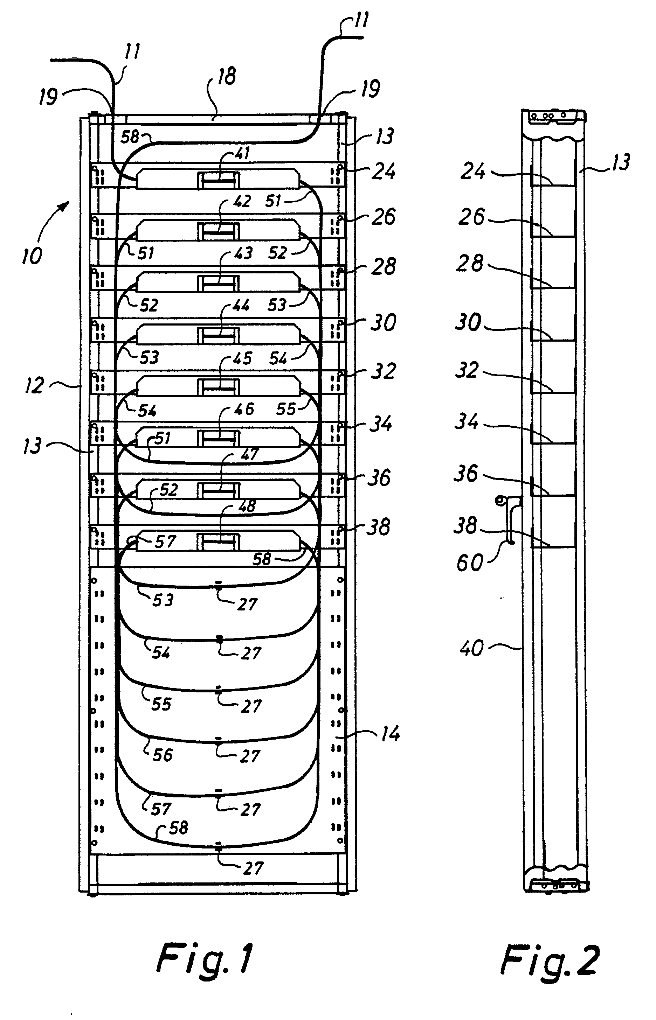

Figures 1 and 2 illustrate a basic embodiment of a cable cabinet or a rack 10 of a structure known per se and comprising a rack of vertical side members 13; 13', a top 18, and a bottom 21 as well as side plates 12, 12' for the mounting of exchangeable units. The cabinet shown is provided with a door 40 and a handle 60. Preferably eight shelves 24, 26, 28, 30, 32, 34, 36, 38 are as shown mounted in the rack 10. The number eight is, however, only mentioned as a preferred number because it is an advantageous number in relation to the standard cabinet height, suitable distance between the shelves, and to a cable comprising points of coupling at intervals of $2\frac{1}{2}$ m.

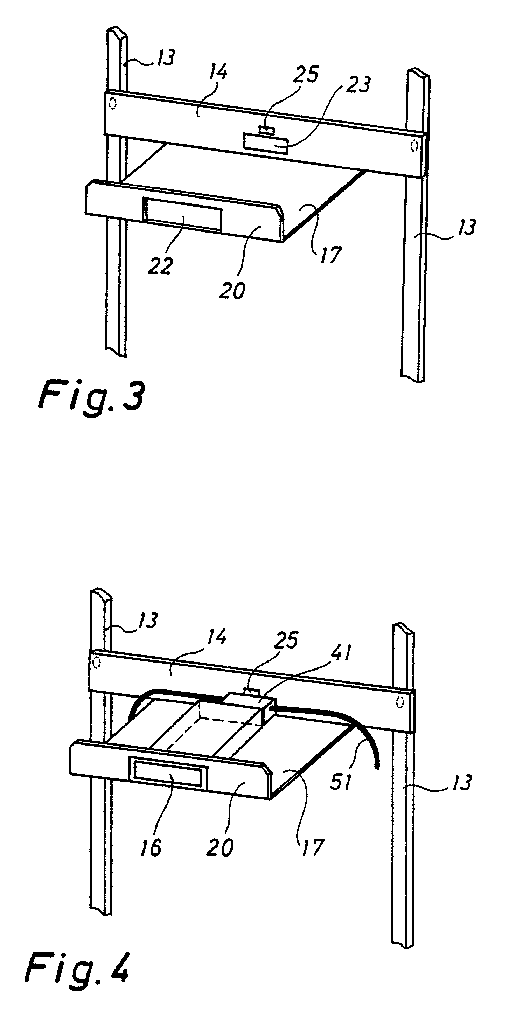

As illustrated in Figures 3 and 4, each shelf 24-38 comprises a back plate 14 secured to both vertical side members 13 forming part of the back of the cabinet. The shelves are provided with a supporting surface 17 and a front plate 20 somewhat shorter than the back plate in such a manner that openings are formed along and just inside the side members 13 of the cabinet, said openings allowing passing of a number of cables 51-58.

A cable forming part of a local network is according to the invention arranged in large circumferential loops 51-58, each loop being of a length of $2\frac{1}{2}$ m which corresponds to the standard distance of a local network between the points of coupling of various data terminals.

As illustrated in Figure 1, the cable is according to a preferred embodiment of the invention passed through an opening 19 in the top plate 18 of the cabinet. As the cable of a local network is usually mounted just below or above the ceilings of the rooms to be coupled to the local network, it is advantageous to pass the cable through the top plate 18. Other passing points can, of course, be chosen in response to the local requirements presented to the installing of the cable cabinet. Subsequently, the cable is laid out in such a manner that one point of coupling 41-48 of each loop 51-58 is arranged on each shelf 24-38. The points of coupling are provided for the coupling of an exchangeable unit 16, usually a transceiver. The exchangeable unit 16 is provided with a coupling joint or a cable securing of a known type comprising jaws engaging the cable sheathing in such a manner that the cable is reliably secured about the point of coupling. The point of coupling has been marked in advance by means of a coloured dot, and a small hole has been drilled by means of special tools through the sheathing, the shielding and the insulating material of the cable to the internal wiring thereof. In addition the shielding has been removed over an area of a diameter corresponding to the diameter of the shielding in such a manner that a T-shaped branching can be provided.

The front plate 20 is provided with an opening 22 just so large that a transceiver can be pushed therethrough. The back plate 14 is preferably provided with a similar opening 23 whereby a portion of the cable securing of the transceiver can project through said opening 23.

The cable cabinet is used in the following manner. When the cable cabinet is being installed, the cable is laid in large circumferential loops, cf. Figure 1, in such a manner that a point of coupling 41-48 is disposed on each cable shelf 24-38 substantially in front of an opening 23. The cable is preferably fixed by means of a cable-securing device inserted through the opening 23 and yet another small opening or slot 25 in the back plate 14. The cable loop originates from the top shelf 24 and is passed downwards along one of the side walls 12 of the cabinet and further through the cabinet towards the opposite side wall 12, whereafter said loop continues upwards along said side wall to the shelf 26 second from the top where the following point of coupling 42 is arranged in front of the opening 23 of the shelf. Subsequently, the cable is passed downwards again along the first side wall 12 through the cabinet towards the opposite side wall 12 and upwards along said side wall to the shelf 28 third from the top with the result that the third point of coupling 43 of the cable is accessible in front of the opening 23 of the shelf third from the top, and so forth. In this manner for instance eight points of coupling 41-48 are arranged vertically below one another and in front of their respective opening 23 when all the loops 51-58 of the cable have been laid out. Finally the cable is passed out of the cabinet, e.g. as shown through the opposing opening 19 in the top plate of the cabinet. Holes or slots 27 are preferably provided in the back plate of the cabinet, cf. Figure 1, whereby the lowermost portion of each cable loop can be secured by means of cable-securing devices.

When a point of coupling is to be used, said point of coupling is pulled towards the opening 22 whereafter the cable is mounted in the coupling joint provided on the back of the transceiver. The transceiver may be of the type outlined in Figure 4 illustrating a transceiver provided with a cable-securing device on the back. When the transceiver has been connected to the cable in a known manner and the cable-securing device has been tightened, the transceiver is pushed into its position through the openings 22, 23. In this manner the transceiver and the cable rest on the supporting surface 17 of the shelf and the cable-securing device projects through the opening 23 in the back plate 14, whereby the position on the shelf of both the cable and the transceiver is fixed and locked. Another advantage is simultaneously achieved, viz. that the indicator lamp situated on the transceiver can be inspected immediately by opening the door 40 of the cabinet, said indicator lamp indicating whether or not the points of coupling 41-48 are functioning.

All the eight accessible points of coupling can be provided with transceivers in a similar manner.

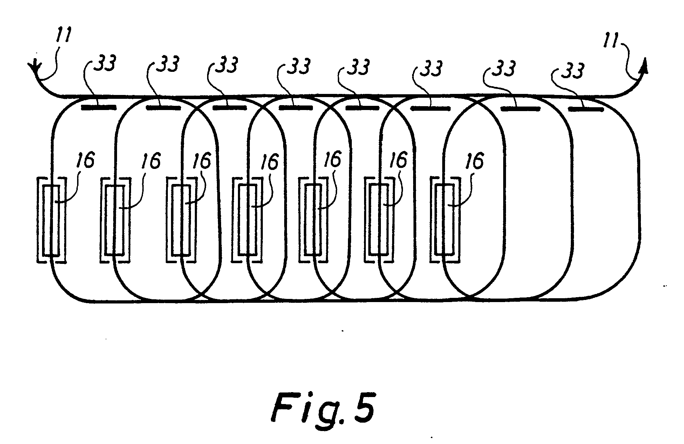

Figure 5 illustrates a second embodiment of a cable system including a rack according to the invention.

In this embodiment the points of coupling 41-48 are substantially horizontally aligned. The rack 10 is for instance secured to a wall in such a manner that the loops 51-58 hang on suitable supporting members 33 mounted on the wall, whereas the transceivers 16 can be mounted in vertical shelves like the ones of Figures 3 and 4.

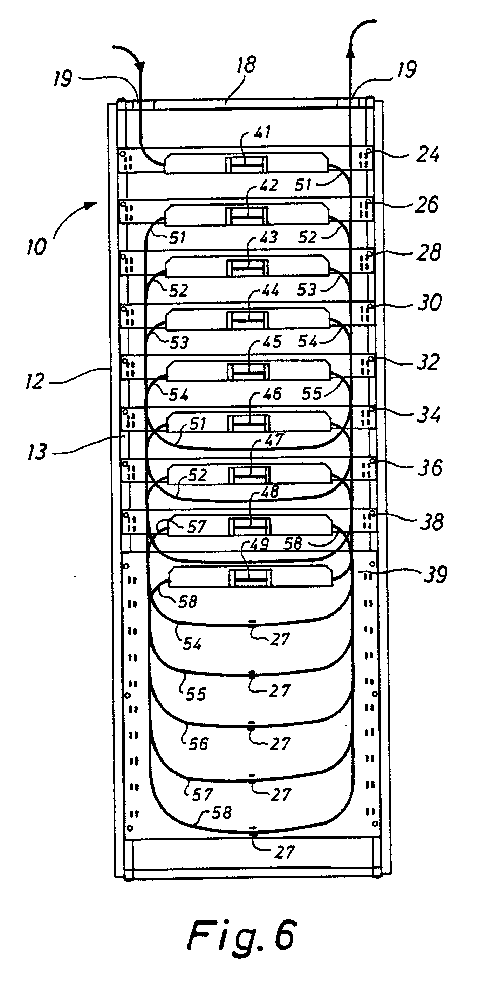

Figure 6 illustrates a modification of the embodiment of Figure 1, where a ninth shelf 39 is provided. The cable is passed across the ninth shelf in such a manner that yet another point of coupling is accessible, whereafter the cable is passed upwards along the right side member 12 and out through the opening 19'.

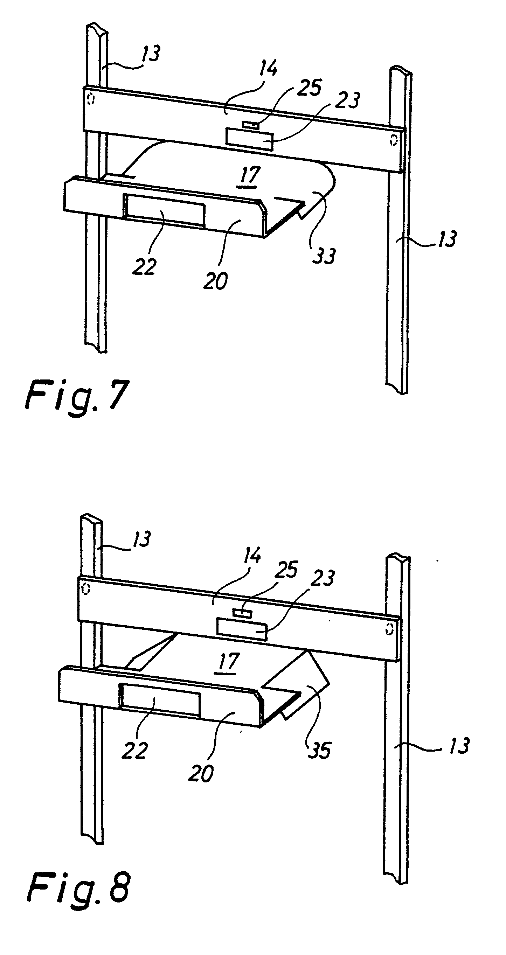

The supporting surfaces 17 of the shelves may be more or less curved, cf. Figure 7, in order to improve the support of the cable. As an alternative the rims of the supporting surface 17 may incline downwards, cf. Figure 8.

## Claims

1. A cable system including a rack (10) for the mounting of exchangeable units (16) adapted to be coupled to a data cable (11) in a local area network in predetermined points of coupling, said points of coupling being located at regular intervals along the cable, characterised in that the cable (11), such as an ETHERNET cable, is arranged in large circumferential loops (51-58) of such a length that the length of an integral number of loops corresponds substantially to the predetermined distance defined as the predetermined interval between two points of coupling of said local data network, typically $2\frac{1}{2}$ m, and such that the loop(s) start at one point of coupling and end at another point of coupling.

2. A cable system including a rack as claimed in claim 1, characterised in that the rack is an upright cable cabinet (10) with a frame structure comprising two side members (13, 13'), a top plate (18), and a bottom plate (21), and that the cable extends through said top plate and/or said bottom plate, and that the side members (13, 13') of the rack carry a plurality of shelves (24-38) for the mounting of the exchangeable units (16) and supporting the cable loops (51-58), the points of coupling (41-48) being situated one below the other in a substantially vertical row, the length of each loop (51-58) corresponding to the predetermined interval.

3. A cable system including a rack as claimed in claim 2, characterised in that the cable is passed through an opening (19) in the top plate (18) of the rack and across the top shelf (24) of the rack in such a manner that the first point of coupling (41) on the cable is accessible in front of the top shelf (24), and that the first loop extends from the top shelf (24) downwards along one (13) of the side members of the rack and further through the rack towards the second side member (13'), whereafter said loop continues upwards along said second side member to the shelf (26) second from the top and then across said shelf (26) second from the top in such a manner that the second point of coupling (42) of the cable is accessible in front of said shelf (26) second from the top, and subsequently the following loops are situated in such a manner that they follow a course corresponding to the course of the first loop, each loop ending on a shelf immediately below the shelf from which it originates except for the final loop which - after the mounting of the final point of coupling (48) on the bottom shelf (38) - is passed out from the cabinet (10) through one of the openings in the top plate (18) or the bottom plate (21).

4. A cable system including a rack as claimed in claim 1, characterised in that the points of coupling are substantially horizontally aligned.

5. A cable cabinet, characterised in that it is adapted to include a cable system according to one or more of the preceding claims 1-4.

6. A cable cabinet as claimed in claim 2, characterised in that each shelf is provided with a back plate (14) extending in the entire width of the cabinet from side member (13) to side member (13') and being secured to said side members, and that the shelf comprises a substantially horizontal supporting surface (17).

7. A cable cabinet as claimed in claim 6, characterised in that each shelf comprises a substantially vertical front plate (20) in connection with the supporting surface (17).

8. A cable cabinet as claimed in claim 7, characterised in that the front plate (20) and the back platte (14) are provided with openings (22, 23) adapted to receive a transceiver which can be coupled to the cable (11).

9. A cable cabinet as claimed in claim 2, characterised in that one or more of the shelves (14) are provided with a supporting surface (17), which at least partially is curved (33 in Figure 7) or provided with obliquely downwardly bent terminal surfaces (35 in Figure 8) for the support of the cable in the rim areas of the shelf from where said cable is hanging.

10. A cable cabinet as claimed in one or more of the preceding claims, characterised in that it comprises a cable with a plurality of circumferential loops passing across their respective shelf (24-38), the points of coupling of the cable being situated on their respective shelf substantially in the middle thereof, and whereby a plurality of said points of coupling are coupled to a correspond ing plurality of transceiver units (16) provided for this purpose.

Fig.1

Fig.2

Fig.3

Fig.4

Fig. 5

*Fig. 6*

Fig.7

Fig.8

**European Patent Office**

**EUROPEAN SEARCH REPORT**

Application number

EP 90 61 0018

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-A1- 2 630 280 (W. BADER) *Figure 6* | 1-10 | H 04 L 12/28 // H 02 B 1/34 H 04 Q 1/06 H 05 K 7/00 |
| A | DE-A1- 3 739 815 (WALDNER ELECTRONICS GMBH & CO.) | 1-10 | |
| A | GB-A- 2 153 636 (ALVERONIC COMPUTER SYSTEMS LIMITED (UNITED KINGDOM)) | 1-10 | |
| A | CH-A- 474 884 (VEB DRUCKMASCHINENWERK PLANETA) *Figures 1-3* | 1-10 | |
| A | US-A- 4 782 482 (E.V. KIATIPOV ET AL) | 1-10 | |

| TECHNICAL FIELDS SEARCHED (Int. Cl.4) |
|---|
| G 02 B H 02 B H 04 L H 04 Q H 05 K |

The present search report has been drawn up for all claims

| Place of search | Date of completion of the search | Examiner |
|---|---|---|
| STOCKHOLM | 22-05-1990 | LANDSTRÖM R. |